(19) Europäisches Patentamt

European Patent Office

Office européen des brevets

(11) EP 0 817 130 A2

(12) EUROPEAN PATENT APPLICATION

(43) Date of publication:
07.01.1998 Bulletin 1998/02

(51) Int. Cl.$^6$: G06T 15/50

(21) Application number: 97110795.8

(22) Date of filing: 01.07.1997

(84) Designated Contracting States:
AT BE CH DE DK ES FI FR GB GR IE IT LI LU MC NL PT SE

(30) Priority: 01.07.1996 US 673044

(71) Applicant:
SUN MICROSYSTEMS, INC.
Mountain View, California 94043-1100 (US)

(72) Inventor: McKeown, Jack R.
Cupertino, CA 95014 (US)

(74) Representative:
Zangs, Rainer E., Dipl.-Ing. et al
Hoffmann Eitle,
Patent- und Rechtsanwälte,
Arabellastrasse 4
81925 München (DE)

(54) **Apparatus and method for calculating specular lighting**

(57) Rapid calculation of specular color component

$$C_s = C_s' + 2^{[O_e * \log_2 D]}$$

for a displayed object subjected to light according to the Phong shading model is made preferably using hardware. For a surface position on the displayed object floating point data for $D = \langle V_e, V_r \rangle$ is obtained, where $V_e$ is a unit vector from the object to the eye point, and $V_r$ is a reflection unit vector from the object. The vector dot product for D is then obtained using multipliers and adders. The dot product bits are multiplied by a constant to generate an index to a first look-up table containing pre-stored values of $\log_2 (D)$. The value of $\log_2 D$ is then multiplied by $O_e$ to generate exponent and fractional field bits representing $O_e * \log_2 D$. These bits are used to create an index into a second look-up table containing antilog$_2$ values, whose output is

$$2^{[O_e * \log_2 (D)]}.$$

This value is then added to $C_s'$ to yield

$$C_s = C_s' + 2^{[O_e * \log_2 (D)]}.$$

Calculation of $C_s$ takes eight computer cycles, which is less what is required for prior art implemented $C_s$ calculations.

FIGURE 3

**Description**

FIELD OF THE INVENTION

The present invention relates generally to graphical display of three-dimensional objects that are subject to specular lighting, and more particularly to apparatuses and methods for calculating specular color lighting data for use in such displays.

BACKGROUND OF THE INVENTION

Modern three-dimensional computer graphics use geometry extensively to describe three-dimensional objects, using a variety of graphical representation techniques. Computer graphics find especially wide use in applications such as computer assisted design ("CAD") programs. Complex smooth surfaces of objects to be displayed may be represented using high level abstractions. Detailed surface geometry may be rendered using texture maps, although providing more realism requires raw geometry, usually in the form of triangles. Position, color, and normal components of these triangles are typically represented as floating point numbers.

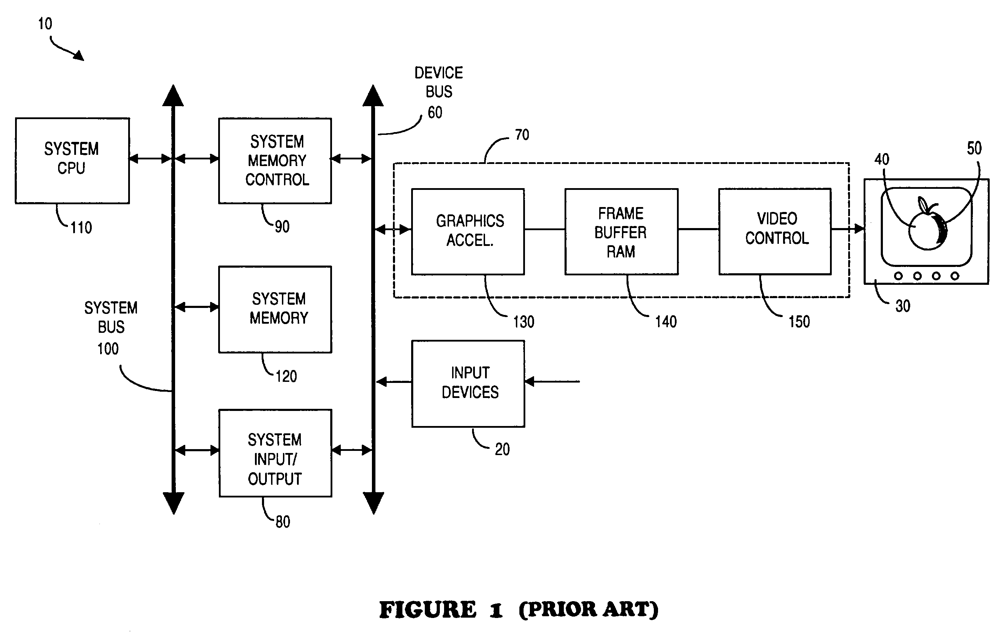

Figure 1 depicts a generic video system 10 such as may be used with a computer or workstation, e.g., a Sun Microsystems, Inc. SPARC workstation, to display user-generated images. Using a drawing program, for example, such images may be created with a mouse, trackball or other user input devices 20 for display on a video monitor 30, among other uses. Within the context of the invention to be described, displayed objects 40 typically will have a three-dimensional surface whose representation includes the effects of light and shading. For example, one or more high-lighted regions 50 on the object surface will contribute to a more realistic representation of the object.

Input data from device 20 typically is coupled to a device bus 60, from where coupling to a video system 70 occurs, as well as coupling to as computer system input/output interface unit 80, and a computer system memory controller unit 90. Units 80 and 90 are typically coupled to a system bus 100 that also is coupled to the system central processor unit ("CPU") 110, and to the computer system persistent memory unit 120. Among other tasks, CPU 110 may be involved with processing triangular data representing the three dimensional surface of the object to be displayed on monitor 30.

CPU-processed video information is via system bus 100, memory controller 90, device bus 60 into video system 70. Video system 70 typically includes a graphics accelerator unit 130, a video frame buffer random access memory ("FBRAM") unit 140 and a video control unit 150. Processed video from video system 70 is then coupled to monitor 30, which displays images such as image 40.

The realism of a computer-displayed image 40 of a three-dimensional object depends upon effectively simulating the effects of shading 50 resulting from incident light falling upon the surface of the object. Such simulation often involves the use of a shading model to compute the intensities and colors to be displayed at various locations on the surface of the object. At best the shading model only approximates the behavior of light falling upon such surface in the actual world. In practice, implementing the model is a compromise between precision of the simulation, and computational cost to provide the simulation. In any event, the model must avoid approximations that would violate perceptions within the normal human visual system of a viewer. For example, so-called Mach bands generated by shading discontinuities, and jagged steps at an improperly sampled surface edge must be avoided.

Two primary components of a shading model are the properties of the object surface, and the properties of the illumination falling upon the surface. The principal surface property is its reflectance, a measure of how much of the incident light is reflected. If a surface has different reflectance for light of different wavelengths, the surface will appear to be colored. If the surface is textured or has a painted pattern, then reflectance will vary with position on the surface. Transparency is yet another surface property, in which the surface can transmit light from behind or from within.

Illumination is also important in determining intensity at a surface location. Illumination may be ambient, diffuse (e.g., uniform from all directions), or there may be point sources of light that create highlights or specular reflections on the object surface. Finally, illumination of an object may be partially blocked due to shadows.

If an object is subjected to incident illumination, highlights on the object surface result from specular reflection, whereas light reflected from the remainder of the object results from ambient or diffuse reflection. The highlight region will have the color of the incident light, while for example, whereas the remainder of the object will exhibit the object's surface color (e.g., red if the object is an apple). If the viewer's head is moved, the region of highlight also moves because surfaces, especially shiny surfaces, reflect light unequally in different directions.

Shading models determine shade at a point on an object's surface in terms of a number of attributes that take into account contribution from diffuse illumination, from specific light sources, and any transparency effect.

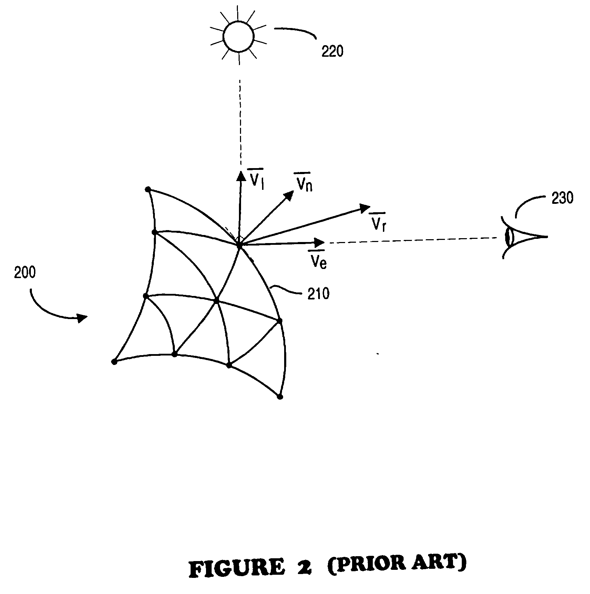

Figure 2 is useful in briefly describing various models of lighting components, including ambient reflected light, diffuse reflected light, specular reflected light, and specular light, and the Newton-Raphson and Phong illumination models. In Figure 2, an actual object 200 (e.g., a real apple) has an outer surface 210 that is exposed to light from a source 220, and is viewed by an observer 230. The surface 210 is depicted as a plurality of triangles.

One component of light seen by observer 230 is ambient reflection, which adds a uniform brightness to the object 200. Thus, ambient reflections do not come from a single source direction or position, but come from all directions with uniform intensity. Ambient reflection may be represented by the following equation:

$$C_a = K_a * O_d * L_c$$

where $C_a$ is the ambient contribution from a light source (e.g., source 220), $K_a$ is the ambient reflection coefficient of the object surface 210, and $O_d$ is the diffuse color of the object 200.

Another component of light that the viewer may see is diffuse reflection. Diffuse reflection models the effect of directional light being scattered in all directions. As such, the intensity of the reflected light will depend upon the incident angle of the incoming light rays, and the reflection coefficient of the subject surface. Diffuse reflection is given by the following equation:

$$C_d = K_d * O_d * L_c * L_a * \langle V_n, V_l \rangle$$

where $C_d$ is the diffuse component from the light source, $K_d$ is the diffuse reflection coefficient, $O_d$ is the diffuse color of the object, $L_c$ is the light source color, and $L_a$ is an attenuation coefficient. The term $\langle V_n, V_l \rangle$ represents the dot product of vector $V_n$ (the unit normal vector from the object surface) and vector $V_e$ (the unit vector from the object surface to the light source). Of course, the dot product of two vectors may be represented as the sum of scaler x-axis, y-axis, z-axis products, as follows:

$$\langle V_n, V_l \rangle = Vn_x * Vl_x + Vn_y * Vl_y + Vn_z * Vl_z$$

Yet another component of light that a viewer may see is specularly reflected light, which is highlights from shiny surfaces of the object being viewed. See, for example, highlight 50 on object 40 in Figure 1. Specular reflection is proportional to the reflectance angle and the direction of the viewer's position from the object. For example, when viewing a shiny surface with highlights, e.g., a shiny apple, the highlight moves as the viewing position changes relative to the object. Generally, the shinier the object surface, the sharper will be the highlight.

One prior art method for calculating specular lighting effects is the so-called Newton-Raphson technique. This iterative method calculates a specular lighting function $f(t_N)$ wherein $f(t_{N+1}) = f(t_N) - f(t)/df(t)$. Unfortunately, implementing Newton-Raphson can be hardware intensive, and the $f(t_N)$ calculation can be slow, especially in slowly converging regimes. In such regimes, a great many CPU iterations may be necessary for each calculation. The result may be that highlights 50 on displayed image 40 are "jerky" or unrealistic, especially during image motion, due to the time needed for the calculations to complete.

Another prior art approach for calculating specular lighting effects utilizes the so-called Phong Bui-Tuong ("Phong") shading model, which includes a specular reflection coefficient $C_s$. The Phong model is often used for non-perfect reflectors, e.g., an apple.

According to the Phong shading model, the specular reflection coefficient $C_s$ is given by:

$$C_s = K_s * O_s * L_c * L_a * \langle V_e, V_r \rangle^{Oe} \tag{1}$$

where $C_s$ is the specular contribution from a light source, $K_s$ is a specular reflection coefficient, $O_s$ is the specular color of the object, $L_c$ is the light source color, $L_a$ is an attenuation coefficient. As above, $\langle V_e, V_r \rangle$ denotes the dot product between the unit vector $V_e$ from the object to the observer's eyepoint, and the unit reflection vector $V_r$ from the object. The term $O_e$ represents a spectral power function that models the sharpness of the highlight.

The attenuation function $L_a$ is given by the equation:

$$L_a = 1/[C_1 + C_2 \, norm(O_p - L_p)]$$

wherein $C_1$ and $C_2$ are user defined constants, vector $O_p$ is the object's position, and vector $L_p$ is the position of the light source.

The reflection vector $V_r$ is represented by:

$$V_r = 2 \langle V_n, V_e \rangle V_n - V_l$$

where vector $V_n$ is the unit surface normal, $V_e$ is the unit vector from the object to the viewer's eyepoint, and $V_l$ is the unit vector from the object to the light source.

The complete Phong illumination model is the summation of ambient reflection $C_a$, diffuse reflection $C_d$, and spec-

ular reflection $C_s$, e.g.,

$$C = C_a + C_d + C_s$$

The most difficult portion of the Phong model to calculate is the specular component $C_s$, whose determination requires calculating a dot product that is then raised to some power $O_e$. Once calculated, $_sC$ values are typically used by a graphics rendering unit within graphics accelerator 130 (see Figure 1) to try to provide a more realistic display of object 40. Because determining values of $C_s$ can be very computationally intensive, application of the Phong model can produce the same "jerky" simulation defects that can characterize Newton-Raphson calculations.

There is a need for a mechanism to rapidly calculate specular lighting components $C_s$ in rendering data, including triangle data, for three-dimensional objects according to the Phong shading model. Preferably such mechanism should be inexpensive to construct, and should be implemented using off-the-shelf generic components.

The present invention discloses such a mechanism.

## SUMMARY OF THE PRESENT INVENTION

The present invention re-arranges terms in the Phong shading model to more rapidly calculate specular component of color $C_s$. Specular color component

$$C_s = (K_s * O_s * L_c * L_a) * <V_e, V_r>^{Oe} = (C_s') * <V_e, V_r>^{O}_e ,$$

where $K_s$ is a specular coefficient, $O_s$ is the specular color of the object, $L_c$ is the light source color, $L_a$ is the light attenuation, $V$ is a unit vector from the object to the eye point, $V_r$ is a reflection unit vector from the object, $O_e$ is the spectral exponent of the object, and $C_s'$ is a constant. Replacing the vector quantity $\langle Ve, Vr \rangle$ with its dot product (D) permits the specular component of color $C_s$ to be written as

$$C_s = {_s}C' * D^{O_e} ,$$

whose base-two log then yields:

$$\log_2(C_s) = \log_2 C_s' + O_e * \log_2 D$$

Taking the base-two antilog of the above equation then yields:

$$C_s = C_s' + 2^{[O_e * \log_2 (D)]}$$

Components $O_e$,

$$C_s'$$

and D are floating point numbers of the form:

s(f bits) $2^{(\text{exponential e bits})}$

which may be abbreviated to $sf2^e$, where s denotes either positive or negative sign, f denotes the fractional component of the number, and e denotes the exponential component of the number. Preferably $O_e$, $C_s'$, and D are represented by 16 bits, according to the following format:

[15: s] [14:10 e] [9: g] [8:0 f]

in which bit 15 is a single bit (s) denoting $\pm$ sign, bits 14-10 are a five-bit exponential field, bit 9 is a single bit "0" or "1" guard (g) bit, and bits 8:0 are a nine-bit fractional field (f).

In the calculation of the generalized preferably 16-bit products, the product sign (s3) is obtained by exclusive-OR'ing the s-bits for input numbers (s1, s2). The fractional field (f3) of the product is obtained by multiplying the fractional field of the first variable (f1) by the fractional field of the second variable (f2), preferably using a ten-bit multiplier.

The exponential field (e3) of the product is obtained by adding the exponential field of the first variable (e1) with the exponential field of the second variable (e2), preferably using an adder. The outputs from the multiplier and from the adder are normalized, and the normalized values are used with the exclusive-OR output to yield the desired floating point product. Calculation of s3, e3, f3 may occur simultaneously or in any order.

The value of $\log_2 D$ is prestored in a first read only memory ("ROM") look-up table ("LUT"). In this fashion, the value of $\log_2 D$ is rapidly and readily determined using hardware for various points on the surface of the object being modeled. This value is then multiplied by $O_e$ using a second multiplier. The product thus formed is now used to calculate a pointer into a second ROM LUT that contains the base-two antilog of the value of $O_e * \log_2 D$. This second ROM LUT output is added to $C_s'$ to produce $C_s$ for the point on the surface of the object being modeled. In this fashion, $C_s$ may be rapidly computed using generic components, the calculation taking not more than eight compute cycles.

Other features and advantages of the invention will appear from the following description in which the preferred embodiments have been set forth in detail, in conjunction with the accompanying drawings.

## BRIEF DESCRIPTION OF THE DRAWINGS

FIGURE 1 depicts a video system in which video-displayed images appear with shading, according to the prior art;

FIGURE 2 depicts the relationship between incident and specularly reflective light, according to the prior art;

FIGURE 3 depicts a video system in which video-displayed images appear with shading calculated according to the present invention;

FIGURE 4 depicts a preferred hardware implementation used to calculate the specular color component $C_s$, according to the present invention;

FIGURE 5A depicts a preferred hardware implementation of a multiplier unit, as used in Figure 4;

FIGURE 5B depicts a preferred hardware implementation of a normalizer unit, as used in Figure 4;

FIGURE 6 is a flow chart showing steps used to rapidly calculate specular color component $C_s$, according to the present invention.

## DETAILED DESCRIPTION OF THE PREFERRED EMBODIMENT

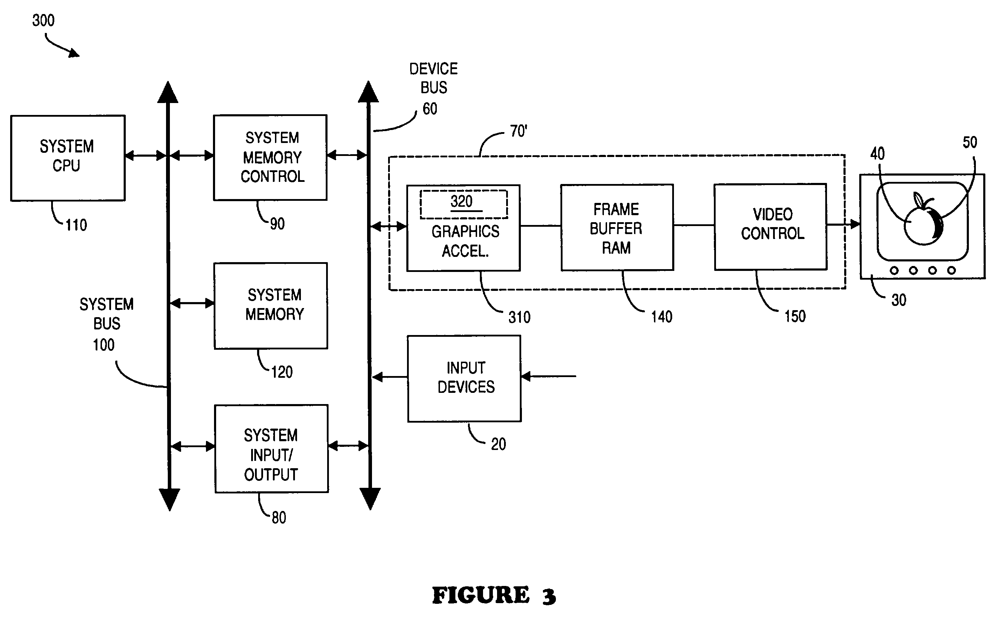

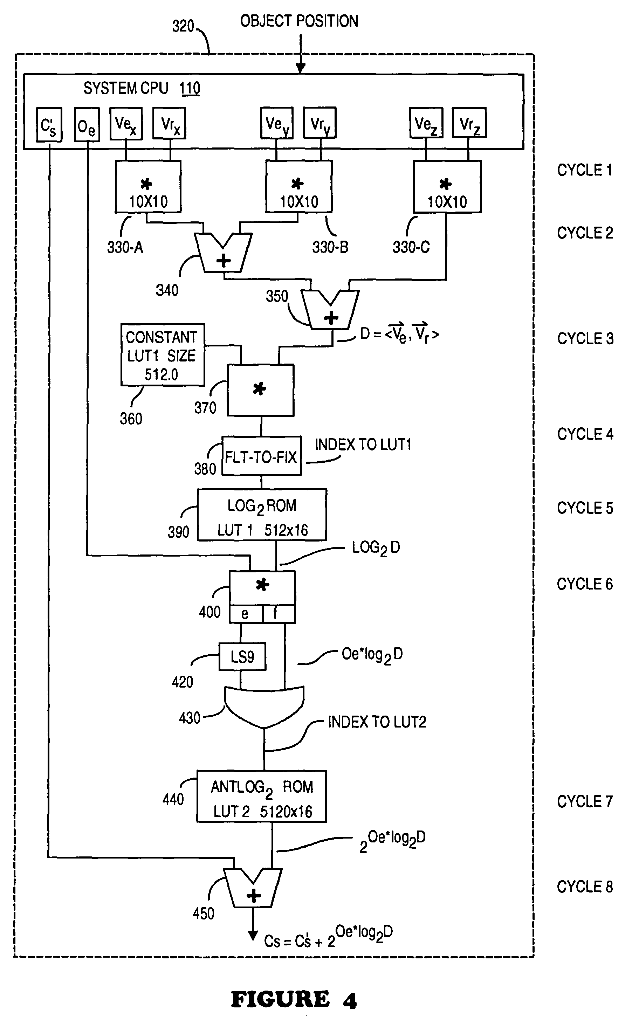

Figure 3 depicts a video system 300 in which the graphics accelerator unit 310 preferably includes hardware 320 used to calculate the specular reflection coefficient component $C_s$, according to the present invention. Figure 4 is a block diagram of hardware 320, which rapidly calculates $C_s$, according to the present invention. The right margin of Figure 4 indicates CPU clock cycles during which the various operations will occur.

The operation of hardware 320 will be better understood from the following mathematical description of the specular component of color, $C_s$. As noted, according to the Phong shading model, the specular component of color $C_s$ is given by:

$$C_s = (K_s * O_s * L_c * L_a) * \langle V_e, V_r \rangle^{O_e} \tag{1}$$

where $K_s$ is the specular reflection coefficient, $O_s$ is the specular color of the object, $L_c$ is the light source color, $L_a$ is an attenuation coefficient, $V_e$ is a unit vector from the object to the eye point, $V_r$ is the unit reflection vector from the object, and $O_e$ is a spectral power function. The values of $K_s$, $O_s$, $L_c$, $L_a$, and $O_e$ generally can vary from point to point on the surface of the object being modeled. $K_s$, $O_s$, $L_c$, $L_a$, and $O_e$ typically are available within floating point processor 320, associated with graphics accelerator 310 (see Figure 4). Details of obtaining these values are not set forth herein, but are readily known to those skilled in the relevant art.

However, the product $(K_s * O_s * L_c * L_a)$ may be represented by a constant $C_s'$, whereupon equation (1) becomes:

$$C_s = C_s' * \langle V_e, V_r \rangle^{O_e} \tag{2}$$

Equation (2) may be further simplified by replacing the quantity $\langle Ve, Vr \rangle$ with the dot product (D) between Ve and Vr. However the dot product of two vectors is simply a scalar represented by the sum of the products of the vector components, as follows:

$$D = V_{ex}{}^*V_{rx} + V_{ey}{}^*V_{ry} + V_{ez}{}^*V_{rz}$$

Thus, equation (2) may be written as:

$$C_s = C_s{}'{}^*D^{Oe} \tag{3}$$

Taking the $\log_2$ of equation (3) then yields:

$$\log_2(C_s) = \log_2(C_s{}') + O_e{}^*\log_2(D) \tag{4}$$

Equation (4) could also be derived from equation (3) using the relationship

$$D^{O_e} \;=\; 2^{O_e{}^*\log_2 D}.$$

Exponentiat$^{ing\ or\ taking}$ the antilog of equation (4) to the base two yields:

$$C_s = C_s{}' + 2^{[O_e{}^*\log^2(D)]} \tag{5}$$

The above relationships are used in the following manner. The surface of the object being modeled may be defined in terms of a plurality of points P. For each such point P corresponding values of $K_s$, $O_s$, $L_c$, $L_a$, $O$ and vector dot product D are known. Stated differently, for points P, values of

$$C_s{}' = K_s{}^*O_s{}^*L_c{}^*L_a$$

and values of D are known.

In practice, $O_e$, $C_s{}'$, and D are floating point numbers of the form s(fractional component)$2^{(exponent\ component)}$, or more simply sf10$^e$, where s denotes positive or negative sign, f denotes fractional component, and e denotes exponential component. With respect to nomenclature used herein, s1 is the bit representation for the sign of $C_s{}'$, s2 is the bit representation for the sign of D, and s3 is the bit representation for the overall product. For $C_s{}'$ the fractional and exponent fields are, respectively f1, e1, and for D these fields are f2 and e2. The products may thus be represented as s3f32$^{e3}$.

In digital computations, the number of binary bits available to compute values for $O_e$, $C_s{}'$, and D may be constrained by computer system requirements. In the preferred embodiment, for example, a 16-bit limitation was imposed by system architecture considerations. As a result, $O_e$, $C_s{}'$, and D were each represented using 16 bits, with the following format, although other bit-lengths and formats may instead be used:

[15: s] [14:10 e] [9: g] [8:0 f].

In the above representation, bit 15 is a single bit denoting positive or negative sign. Bits 14-10 are a five-bit exponential field, and bit 9 is a single bit "0" or "1" guard (g) bit. The guard bit helps distinguish the fractional bit field from the exponent bit field. Bits 8:0 are a nine-bit fractional field.

Referring now to Figure 4, for a given position of the object 40 to be displayed on monitor 30, CPU 110 will have available floating point representations of $\langle V_e, V_r \rangle$, as well as data for $O_e$ and for $C_s{}'$, which permit calculation of $C_s$ as indicated by equations (2) through (5).

Using preferably 10 bit x 10 bit multipliers 330-A, 330-B, 330-C, respective products $V_{ex}{}^*V_{rx}$, $V_{ey}{}^*V_{ry}$, and $V_{ez}{}^*V_{rz}$ are formed by these multipliers. (Figure 5A, described later herein, depicts a generalized preferred implementation for such multipliers.) In Figure 4, the product outputs from multipliers 330-A and 330-B preferably are added using adder 340, whose input is coupled to an adder 350. The product output from multiplier 330-C is coupled to the second input of adder 350. The output of adder 350 is $V_{ex}{}^*V_{rx} + V_{ey}{}^*V_{ry} + V_{ez}{}^*V_{rz}$, which is D. Of course if the above dot products were already calculated within, or available to, CPU 110, then fewer compute cycles were be required to arrive at $C_s$.

The value of $O_e$ was known, and at this juncture, D is now also known. Block element 360 stores a constant that is the 16-bit size of a first look-up table (LUT1) 390, and is set to 512.0 in the preferred embodiment. This constant is coupled as a first input to a multiplier 370, whose second input is the value of D output from adder 350. Multiplier 370 outputs a floating point product of the constant multiplied by D. This product is converted to fixed-point format by a floating point-to-fixed point converter 380. In the preferred embodiment, this conversion is carried out using left and right shift registers, in a method well known to those skilled in the art. For that reason, details are not presented for converter 380.

The fixed-point output of converter 380 is used as a pointer to the first look-up table 390, preferably a 512x16 bit read-on-memory ("ROM") that contains pre-stored values of $\log_2(D)$.

LUT1 outputs $\log_2 D$ as an input to a multiplier 400, whose second input is the value $O_e$. Multiplier 400 outputs exponential and fractional field bits, here denoted e and f respectively, which represent $O_e{}^*\log_2(D)$. The exponential field bits are left-shifted by nine positions in the preferred embodiment to implement a multiply-by-256 function and are input with the fractional field bits to an OR logic unit 430. The OR'ed output is used as an index pointer to the contents of a second ROM look-up table (LUT2) 440. LUT2 prestores $antilog_2$ values and is 5120x16 bits in size in the preferred embodiment.

The output of LUT2 400 is

$$2^{[O_e{}^*\log^2 {}^{(}D)]}$$

which value is input to an adder 450, whose second input is $C_s'$. The output from adder 450 is

$$C_s' + 2^{[O_e{}^*\log^2 {}^{(}D)]},$$

e.g., the desired value of $C_s$.

Figure 5A depicts a typical multiplier unit 330, such as might be used to implement multiplier 330-A, for example. The two numbers to be multiplied $V_1, {}_2V$ are each characterized by sign bits $S_1, S_2$, by exponential field bits $e_1, e_2$, and by fractional field bits $_1f, _2f$ respectively. These sign, exponent, and fractional field bits preferably are held in respective registers 345-1 and 345-2. The sign S3 of the product $V_1{}^*V_2$ is obtained by exclusive-OR'ing the sign bits $S_1, S_2$ with EX-OR unit 460. The exponent field bits $e_3$ for the product are obtained by adding the $_1e, _2e$ bits in an adder 470, and normalizing the adder output with a normalizer unit 490. The fractional field bits $f_3$ for the product are obtained by multiplying the $f_1, f_2$ bits with a multiplier 480 and normalizing the product with normalizer 490. The sign, exponent and fractional field bits for the product preferably are placed in a register 500 for use. In the preferred embodiment, the products are words having 16-bit length and floating point format. Those skilled in the art will appreciate that multiplier units may be implemented in other ways as well.

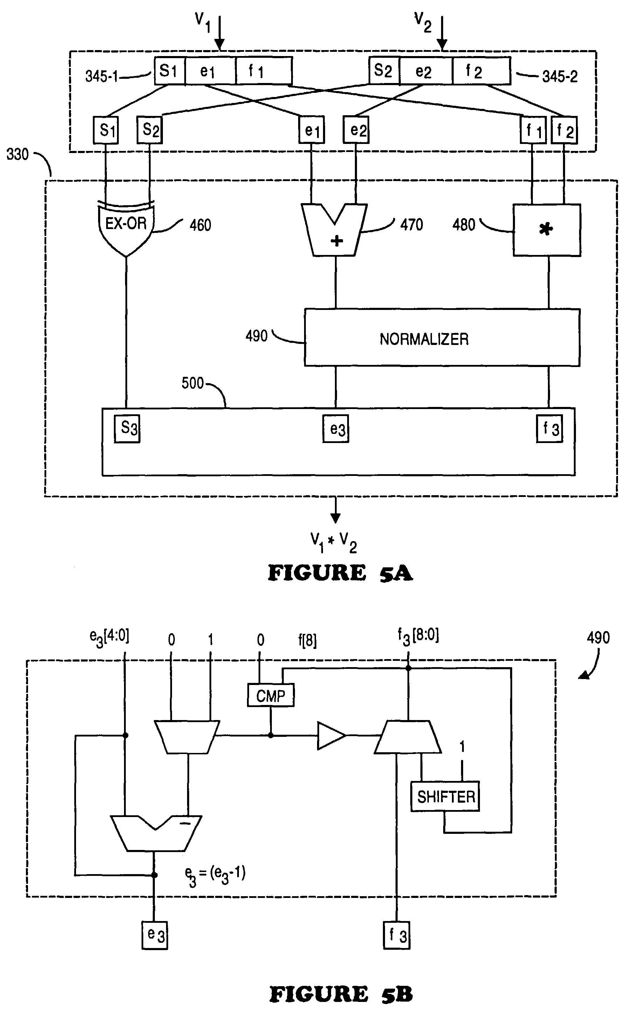

Figure 5B depicts a typical normalizer unit such as unit 490 in Figure 4. Details as to the operation of normalizer unit 490 are not presented as the operation of such units are understood by those skilled in the art. Further, normalization of values may be implemented in alternative ways as well.

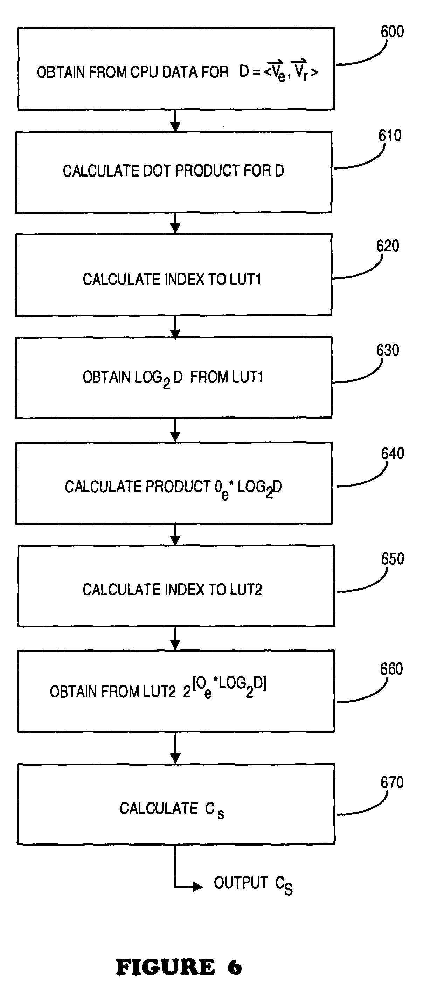

Figure 6 is a flow chart depicting the steps involved in calculating $C_s$, according to the present invention. At step 600, floating point format values for $\langle V_n, V_e \rangle = D$ are obtained from CPU 110 for the point on the surface of the object to be displayed. At step 610, the dot product is obtained for

$$D = Vn_x{}^*Ve_x + Vn_y{}^*Ve_y + Vn_z{}^*Ve_z .$$

As noted earlier with respect to Figure 5A, the sign of the dot product components results from exclusive-OR'ing sign bits, the exponent field bits for the products are obtained by adding the component value exponential field bits and normalizing the sum, and the fractional field bits for the components and normalizing the product.

At step 620, the index for LUT 1 is calculated, as was described with respect to converter 380 in Figure 4. At step 630, the appropriate value for $\log_2 D$ is obtained from LUT1 using the fixed-point format pointer index determined at step 620.

At step 640, the product $O_e{}^*\log_2 D$ is calculated, using the value of $O_e$ available to CPU 110, and using the $\log_2 D$ value input to multiplier 400 in Figure 4. At step 650, the index pointer into LUT2 is calculated (see OR-gate 430 in Figure 4) for use at step 660 in obtaining the appropriate value

$$2^{[O_e{}^*\log^2 D]}$$

from LUT2. At step 670, the appropriate value of $C_s$ is calculated and is output. Once $C_s$ is calculated, the overall value $C = C_a + C_a + C_s$ is readily determined by addition.

Understandably, there are design trade-offs in allocating use of the available 16 bits (or other bit size) . In the preferred embodiment, applicant discovered using computer simulation that the disclosed use of five exponent field bits and nine fraction field bits yielded adequate resolution. By contrast, using four exponential field bits and ten fraction field bits was found to yield less acceptable resolution. Using a simulator written in C language, applicant compared $C_s$ calculations according to the present invention with the e=five-bit, f=nine-bit fields used with a 32-bit calculation according to the IEEE standard. The bit format used in the present invention rapidly provided values for $C_s$ with sufficient resolution to be in agreement with IEEE-calculated values of $C_s$ within a tolerance of about 0.002.

In summation, the present invention provides a rapidly executable solution to the value of $C_s$, using readily available generic hardware components. As noted in the right hand portion of Figure 4, $C_s$ may be calculated in only eight CPU clock cycles. Of course, once $C_s$ is known,

$$C_a + C_d + C_s = C$$

is readily determined. Calculation of C according to the present invention is substantially faster than calculations using prior art Newton-Raphson iteration methods. As a result, system 300 can render more realistic graphic representations of a displayed object than is possible in the prior art. For example, $C_s$ calculations are sufficiently rapid to minimize if not substantially eliminate the jerkiness that is seen if a displayed object having highlights is moved too rapidly. Of course, a properly rendered image available from system 300 could also be stored, for example on video tape, on a compact disk ("CD"), on optical storage, or the like, for later use.

Modifications and variations may be made to the disclosed embodiments without departing from the subject and spirit of the invention as defined by the following claims.

## Claims

1. A method for calculating specular color component

$$C_s = C_s' + 2^{[O_e * \log_2 (D)]}$$

wherein $C_s'$ and $C_s$ are known, as are unit vector components $Ve_x$, $Vr_x$, $Ve_y$, $Vr_y$, $Ve_z$, and $Vr_z$ whose dot product, if determined, is a vector quantity $\langle Ve, Vr \rangle = D$, the method comprising the following steps:

(a) calculating a value D from said values of $Ve_x$, $Vr_x$, $Ve_y$, $Vr_y$, $Ve_z$, and $Vr_z$;
(b) providing a first look-up table containing prestored values of $\log_2 D$;
(c) using the value of said D calculated at step (a) as an index into said first look-up table, and obtaining from said first look-up table a value $\log_2 D$;
(d) multiplying said $O_e$ by said value $\log_2 D$ obtained in step (c) to determine $O_e * \log_2 D$;
(e) providing a second look-up table containing $\text{antilog}_2$ values;
(f) using the value of $O_e * \log_2 D$ calculated at step (d) as an index into said second look-up table, and obtaining from said second look-up table a value

$$2^{[O_e * \log_2 D]};$$

and
(g) adding said $C_s'$ to said value

$$2^{[O_e * \log_2 D]}$$

determined at step (f) to obtain said $C_s$.

2. The method of claim 1, wherein step (a) includes multiplying $Ve_x$ by $Vr_x$ to form a first product, multiplying $Ve_y$ by $Vr_y$ to form a second product, and multiplying $Ve_z$ by $Vr_z$ to form a third product, and summing said third product with a sum of said first product and said second product.

3. The method of claim 2, wherein step (a) includes at least:

(i) exclusive-OR'ing sign bits associated with $Ve_x$ by $Vr_x$ to form a sign bit representing sign of said first product;
(ii) adding exponent field bits representing said $Ve_x$ and $Vr_x$ to form field bits representing said first product;

and (iii) multiplying fractional field bits for said $Ve_x$ and $Vr_x$ to form fractional field bits representing said first product.

**4.** The method of claim 1, wherein step (c) includes:

(i) multiplying said value D determined in step (a) by a constant representing storage capacity of said first look-up table to form an intermediate product; and
(ii) converting said intermediate product to fixed-point format to form said index.

**5.** The method of claim 1, wherein step (f) includes OR'ing fractional field bits representing said $O_e*log_2 D$ determined in step (d) by shifting bits that represent exponent field bits for said $O_e*log_2 D$.

**6.** The method of claim 1, wherein execution of steps (a) through (g) takes less than nine compute cycles.

**7.** A method for calculating specular color component

$$C_s = C_s' + 2^{[O_e * log_2 (D)]}$$

wherein $C_s'$, $O_e$ and $D = \langle Ve, Vr \rangle$ = dot product of unit vector components $Ve_x$, $Vr_x$, $Ve_y$, $Vr_y$, $Ve_z$, and $Vr_z$ are known, the method comprising the following steps:

(a) providing a first look-up table containing prestored values of $log_2 D$;
(b) using a given value of said D as an index into said first look-up table, and obtaining from said first look-up table a value $log_2 D$;
(c) multiplying said $O_e$ by said value $log_2 D$ obtained in step (b) to determine $O_e*log_2 D$;
(d) providing a second look-up table containing antilog$_2$ values;
(e) using the value of $O_e*log_2 D$ calculated at step (c) as an index into said second look-up table, and obtaining from said second look-up table a value and
(f) adding said $C_s'$ to said value

$$2^{[O_e * log_2 D]}$$

determined at step (e) to obtain said $C_s$.

**8.** The method of claim 7, wherein step (b) includes:

(i) multiplying said value D by a constant representing storage capacity of said first look-up table to form an intermediate product; and
(ii) converting said intermediate product to fixed-point format to form said index.

**9.** The method of claim 7, wherein step (e) includes OR'ing fractional field bits representing said $O_e*log_2 D$ determined in step (d) by shifting bits that represent exponent field bits for said $O_e*log_2 D$.

**10.** The method of claim 7, wherein execution of steps (a) through (g) takes less than six compute cycles.

**11.** A system for calculating specular color component

$$C_s = C_s' + 2^{[O_e * log_2 (D)]}$$

wherein $C_s'$ and $O$ are known, as are unit vector components $Ve_x$, $Vr_x$, $Ve_y$, $Vr_y$, $Ve_z$, $Vr_z$ whose dot product, if determined, is a vector quantity $\langle Ve, Vr \rangle = D$, the system including:

a central processor unit (CPU) system programmed to calculated a value D from said values of $Ve_x$, $Vr_x$, $Ve_y$, $Vr_y$, $Ve_z$, and $Vr_z$;

a first index pointer mechanism coupled to use said value of D and to output a first pointer index;

a first look-up table containing pre-stored values of $\log_2 D$; said first pointer index pointing to said values in said first look-up table, whereupon said first look-up table outputs a value $\log_2 D$;

a multiplier coupled to multiply said $O_e$ by said value $\log_2 D$ to output therefrom a product $O_e{}^*\log_2 D$;

a second index pointer mechanism coupled to use said value $O_e{}^*\log_2 D$ and to output a second pointer index;

a second look-up table containing $\text{antilog}_2$ values; said second pointer index pointing to said $\text{antilog}_2$ values in said second look-up table, whereupon said second look-up table outputs a value

$$2^{[O_e{}^*\log^2 D]};$$

and
an adder coupled to sum said $C_s^{\cdot}$ to said value

$$2^{[O_e{}^*\log^2 D]}$$

to provide said $C_s$.

12. The system of claim 11, wherein said CPU system includes:

a first multiplier that multiplies $Ve_x$ by $Vr_x$ to form a first product;
a second multiplier that multiplies $Ve_y$ by $Vr_y$ to form a second product;
a third multiplier that multiplies $Ve_z$ by $Vr_z$ to form a third product;
a summer mechanism that sums said third product with a sum of said first product and said second product.

13. The system of claim 12, wherein at least said first multiplier unit includes step (a) includes:

an exclusive-OR unit coupled to exclusive-OR sign bits associated with $Ve_x$ by $Vr_x$ to form a sign bit representing sign of said first product;
an adder coupled to add exponent field bits representing said $Ve_x$ and $Vr_x$ to form field bits representing said first product; and
a fractional field multiplier that multiplies fractional field bits for said $Ve_x$ and $Vr_x$ to form fractional field bits representing said first product.

14. The system of claim 11, wherein said first index pointer mechanism includes:

a multiplier coupled to multiply said value D by a constant representing storage capacity of said first look-up table to form an intermediate product; and
a fixed-point to floating-point format convert that converts said intermediate product to fixed-point format to form said first index.

15. The system of claim 11, wherein said second index pointer mechanism includes:

a bit position shifter unit coupled to shift exponent field bits representing said $O_e{}^*\log_2 D$; and
an OR gate coupled to OR fractional field bits representing said $O_e{}^*\log_2 D$ with the shifted said exponent field bits represent said $O_e{}^*\log_2 D$, and to output said second index pointer.

16. The system of claim 11, wherein said system computes said $C_s$ in less than nine compute cycles of said CPU system.

17. The system of claim 11, wherein said system uses sixteen-bit words in which five bits are used to represent an exponent field and nine bits are used to represent a fraction field.

18. The system of claim 17, wherein said system has at least one characteristic selected from the group consisting of (i) said first look-up table is 512x16 bits capacity, (ii) said second look-up table is 5120x16 bits capacity, and (iii) said value D is calculated using 10x10 bit multipliers.

**19.** A system for calculating specular color component

$$C_s = C_s' + 2^{[O_e * \log^2 (D)]}$$

wherein $_sC$, $_eO$ and $D = \langle Ve, Vr \rangle$ = dot product of unit vector components $Ve_x$, $Vr_x$, $Ve_y$, $Vr_y$, $Ve_z$, and $Vr_z$ are known, the method comprising the following steps:

a first index pointer mechanism coupled to use said value of D and to output a first pointer index;
a first look-up table containing pre-stored values of $\log_2 D$; said first pointer index pointing to said values in said first look-up table, whereupon said first look-up table outputs a value $\log_2 D$;
a multiplier coupled to multiply said $O_e$ by said value $\log_2 D$ to output therefrom a product $O_e * \log_2 D$;
a second index pointer mechanism coupled to use said value $O_e * \log_2 D$ and to output a second pointer index;
a second look-up table containing $antilog_2$ values; said second pointer index pointing to said $antilog_2$ values in said second look-up table, whereupon said second look-up table outputs a value

$$2^{[O_e * \log^2 D]};$$

and
an adder coupled to sum said $C_s'$ to said value

$$2^{[O_e * \log^2 D]}$$

to provide said $C_s$.

**20.** The system of claim 19, wherein computation of said Cs takes less than 5 compute cycles for said CPU system.

**FIGURE 1 (PRIOR ART)**

EP 0 817 130 A2

**FIGURE 2 (PRIOR ART)**

**FIGURE 3**

EP 0 817 130 A2

OBJECT POSITION

320

SYSTEM CPU 110

| $C'_s$ | $O_e$ | $Ve_x$ | $Vr_x$ | | $Ve_y$ | $Vr_y$ | | $Ve_z$ | $Vr_z$ |

CYCLE 1

* 10X10   * 10X10   * 10X10

330-A          330-B          330-C

CYCLE 2

+

340          350

+

$D = <\vec{V_e}, \vec{V_r}>$

CYCLE 3

CONSTANT
LUT1 SIZE
512.0

360          370          *

CYCLE 4

380   FLT-TO-FIX   INDEX TO LUT1

CYCLE 5

390   LOG$_2$ ROM
LUT 1   512x16

LOG$_2$ D

CYCLE 6

400   *
      | e | f |

420   LS9   $O_e * \log_2 D$

430   INDEX TO LUT2

440   ANTLOG$_2$ ROM
LUT 2   5120x16

CYCLE 7

$2^{O_e * \log_2 D}$

CYCLE 8

450   +

$Cs = C's + 2^{O_e * \log_2 D}$

## FIGURE 4

**FIGURE 5A**

**FIGURE 5B**

OBTAIN FROM CPU DATA FOR $D = <\vec{V_e}, \vec{V_r}>$ — 600

CALCULATE DOT PRODUCT FOR D — 610

CALCULATE INDEX TO LUT1 — 620

OBTAIN $LOG_2 D$ FROM LUT1 — 630

CALCULATE PRODUCT $0_e * LOG_2 D$ — 640

CALCULATE INDEX TO LUT2 — 650

OBTAIN FROM LUT2 $2^{[O_e * LOG_2 D]}$ — 660

CALCULATE $C_s$ — 670

OUTPUT $C_s$

**FIGURE 6**